# EUROPÄISCHE PATENTSCHRIFT

(11) **EP 1 561 617 B1**
(45) Veröffentlichungstag und Bekanntmachung des Hinweises auf die Patenterteilung: **23.01.2008**
(21) Anmeldenummer: 05002316.7
(22) Anmeldetag: 03.02.2005
(51) Int. Cl.: B60H 1/00, B60H 1/03, F02N 17/06, B60H 1/22, F01P 3/20

(54) **Fahrzeugtemperiersystem**
Temperature regulating system for a vehicle
Système pour tempérer un véhicule

(30) Priorität: 06.02.2004 DE 102004006008
(43) Veröffentlichungstag der Anmeldung: 10.08.2005
(73) Patentinhaber: J. Eberspächer GmbH & Co. KG, 73730 Esslingen (DE)
(72) Erfinder: Eberspach, Günter, 72649 Wolfschlungen (DE)
(74) Vertreter: Ruttensperger, Bernhard

(56) Entgegenhaltungen:
- DE-A1- 4 032 701
- DE-A1- 4 105 199
- DE-C1- 10 024 448
- US-A1- 2001 042 740
- US-A1- 2002 100 290
- PATENT ABSTRACTS OF JAPAN Bd. 008, Nr. 148 (M-308), 11. Juli 1984 (1984-07-11) & JP 59 043967 A (NIPPON JIDOSHA BUHIN SOGO KENKYUSHO KK; others: 01), 12. März 1984 (1984-03-12)

## Beschreibung

Die vorliegende Erfindung betrifft ein Fahrzeugtemperiersystem, welches eine Brennkraftmaschine mit einem Motorblock und einem Zylinderkopf sowie eine Wärmequelle zur Erwärmung eines Wärmeübertragungsmediums umfasst, sowie ein Verfahren zum Betreiben eines derartigen Fahrzeugtemperiersystems, insbesondere in einer Startphase der Brennkraftmaschine bzw. einer vor der Startphase der Brennkraftmaschine liegenden Vorwärmphase.

Bei derartigen Fahrzeugtemperiersystemen, bei welchen durch die Wärmequelle zusätzlich zu der bei Betreiben der Brennkraftmaschine dort anfallenden Wärme ein Wärmeübertragungungsmedium, im Allgemeinen eine Flüssigkeit, wie z.B. Wasser, erwärmt werden kann, bestehen im Betrieb verschiedene Anforderungen. Einerseits soll ein derartiges System so betrieben werden, dass bei Nutzungsaufnahme eines Fahrzeugs für den Fahrer angenehme Umgebungsbedingungen, also beispielsweise angenehme Innenraumtemperaturen, abgetaute Scheiben und dergleichen, vorliegen. Andererseits bestehen auch zunehmend strenger werdende gesetzliche Anforderungen an die Abgasemission insbesondere in der Startphase. Die Einhaltung dieser gesetzlichen Anforderungen wird insbesondere für die immer höhere Leistungen und Drehmomente bereitstellenden Dieselbrennkraftmaschinen schwieriger. So ist es bekannt, zur Schadstoffemission in der Startphase die in der Wärmequelle bereitgestellte und auf das Wärmeträgermedium übertragene Wärme primär in Richtung Brennkraftmaschine zu leiten, um diese möglichst schnell auf Betriebstemperatur oder in Richtung Betriebstemperatur zu erwärmen und somit die Kaltlaufphase mit vergleichsweise hoher Schadstoffemission möglichst kurz zu gestalten.

Das Dokument DE 4032701 A zeigt, ein Fahrzeugtemperiersystem sowie ein Verfahren zum Betreiben desselben, bei welchen den Anforderungen an eine möglichst geringe Schadstoffemission in der Startphase der Brennkraftmaschine einerseits und einen möglichst hohen Komfort für eine ein Fahrzeug nutzende Person andererseits in verbesserter Art und Weise genügt wird.

Diese Aufgabe wird in DE 40 32 701 A gelöst durch ein Fahrzeugtemperiersystem, umfassend:
- eine Brennkraftmaschine mit einem Motorblock und einem Zylinderkopf,
- eine Wärmequelle zur Erwärmung eines Wärmeträgermediums,
- eine Wärmetauscheranordnung zur Übertragung von in dem Wärmeträgermedium transportierter Wärme auf in einen Fahrzeuginnenraum einzuleitende Luft,
- eine Ventilanordnung, durch welche das von der Wärmequelle erwärmte Wärmeträgermedium wahlweise wenigstens zum Teil einem im Bereich des Zylinderkopfs vorgesehenen ersten Wärmeübertragungsbereich der Brennkraftmaschine zuleitbar ist, ohne in einen zweiten Wärmeübertragungsbereich der Brennkraftmaschine geleitet zu werden, der im Bereich des Motorblocks vorgesehen ist.

Aufgabe der vorliegenden Erfindung ist es in der Startphase der Brennkraftmaschine, die bei dann bereits ablaufender Verbrennung im Zylinderkopf entstehende Wärme möglichst auch in diesem Bereich zu halten, gleichwohl jedoch einen kleinen Anteil des Wärmeträgermediums bereits auch mitzuerwärmen. Deshalb ist die Ventilanordnung dazu ausgebildet, einen im Wesentlichen nur den ersten Wärmeübertragungsbereich und eine Förderpumpe umfassenden Strömungskreislauf bereitzustellen. Dieser ist von der Wärmequelle und der Wärmetausches anordnung abgekoppelt.

Bei dem erfindungsgemäßen Fahrzeugtemperiersystem ist die Möglichkeit geschaffen, die in der Wärmequelle bereitgestellte Wärme zur bevorzugten Erwärmung des Zylinderkopfs einzusetzen, ohne in diesem Zustand zunächst auch den Motorblock mitzuerwärmen oder in wesentlichem Umfang mitzuerwärmen. Auf diese Art und Weise kann die in der Wärmequelle bereitgestellte Wärme oder zumindest ein Teil oder ein wesentlicher Teil davon effizient in demjenigen Bereich der Brennkraftmaschine wirksam gemacht werden, dessen Erwärmung in der Startphase der Brennkraftmaschine hinsichtlich der Reduzierung der Schadstoffemissionen von größter Bedeutung ist. Da der Zylinderkopf derjenige Bereich der Brennkraftmaschine ist, in welchem im Allgemeinen die Brennstoffeinleitung bzw. Brennstoffeinspritzung erfolgt und primär auch die Zündung und Verbrennung des Brennstoffs erfolgt, kann durch das möglichst schnelle und primäre Erwärmen dieses Bereichs der Brennkraftmaschine die mit dem Nachteil hoher Schadstoffemissionen behaftete Kaltlaufphase deutlich verkürzt werden. Gleichzeitig wird dadurch, dass zumindest in dieser Phase nicht auch noch der Motorblock in wesentlichem Ausmaß miterwärmt werden muss, die Möglichkeit bereitgestellt, einen Teil der in der Wärmequelle bereitgestellten Wärme durch Leiten des Wärmeträgermediums bzw. eines Teils davon in Richtung zur Wärmetauscheranordnung dazu zu nutzen, die in den Fahrzeuginnenraum einzuleitende Luft zu erwärmen und somit auch in der Startphase der Brennkraftmaschine bereits eine gewisse Erwärmung des Fahrzeuginnenraums zu erlangen.

Um bei einer Ausnutzung der in der Wärmequelle bereitgestellten Wärme und selbstverständlich auch der in der Brennkraftmaschine im Verbrennungsbetrieb derselben erzeugten Wärme eine sehr hohe Variabilität erlangen zu können, wird vorgeschlagen, dass die Ventilanordnung ein erstes Ventil umfasst, welches dazu ausgebildet ist, wahlweise eine Strömungsverbindung zwischen
- der Wärmequelle und der Wärmetauscheranordnung oder/und
- der Wärmequelle und dem ersten Wärmeübertragungsbereich oder/und
- der Wärmetauscheranordnung und dem ersten Wärmeübertragungsbereich
herzustellen.

Um auch das Einschalten des zweiten Wärmeübertragungsbereichs, also im Wesentlichen des Motroblocks, in den Erwärmungskreislauf erlangen zu können, wird vorgeschlagen, dass die Ventilanordnung ein zweites Ventil umfasst, das dazu ausgebildet ist, wahlweise eine Strömungsverbindung zwischen dem ersten Wärmeübertragungsbereich und dem zweiten Wärmeübertragungsbereich herzustellen.

Alternativ oder zusätzlich zu dem Bereitstellen dieses zweiten Ventils zwischen dem ersten Wärmeübertragungsbereich und dem zweiten Wärmeübertragungsbereich kann das Zuschalten des zweiten Wärmeübertragungsbereichs in den Temperierkreislauf dadurch erlangt werden, dass das erste Ventil dazu ausgebildet ist, wahlweise eine Strömungsverbindung zwischen dem zweiten Wärmeübertragungsbereich und der Wärmequelle herzustellen.

Ferner kann das erste Ventil dazu ausgebildet sein, eine Strömungsverbindung zwischen
- dem zweiten Wärmeübertragungsbereich und dem ersten Wärmeübertragungsbereich oder/und
- dem zweiten Wärmeübertragungsbereich und der Wärmetauscheranordnung
herzustellen.

Die Wärmequelle des erfindungsgemäßen Fahrzeugtemperiersystems kann beispielsweise ein vorzugsweise mit fossilem Brennstoff betriebenes Heizgerät umfassen. Ein derartiges Heizgerät kann beispielsweise als Standheizung oder Zuheizer vorgesehen sein und allgemein mit dem gleichen Brennstoff betrieben werden, wie die Brennkraftmaschine. Alternativ oder zusätzlich kann auch ein Brennstoffzellensystem vorgesehen sein, das durch Umsetzung von Wasserstoff und Luftsauerstoff einerseits Elektrizität erzeugt und andererseits bei dieser Umsetzung auch Wärme bereitstellt. Auch diese Wärme kann dann bei dem erfindungsgemäßen System genutzt werden. Im Zusammenhang mit diesem Brennstoffzellensystem kann beispielsweise auch ein Reformer vorgesehen sein, der aus fossilem Brennstoff ein wasserstoffhaltiges Gas bereitstellt. Auch bei dem dabei ablaufenden Reformierungsprozess entsteht Wärme, die im erfindungsgemäßen Temperiersystem genutzt werden kann.

Vor allem dann, wenn in einem Fahrzeug eine zusätzliche Energiequelle, wie beispielsweise eine Brennstoffzelle vorgesehen ist, durch welche elektrische Energie bereitgestellt werden kann, ohne das Bordspannungssystem, also beispielsweise eine Batterie, wesentlich zu belasten, kann weiter eine elektrisch betreibbare Heizeinrichtung vorgesehen sein, durch welche dem Wärmeträgermedium oder/und der in den Fahrzeuginnenraum einzuleitenden Luft Wärme zuführbar ist. Auf diese Art und Weise kann in der Startphase und ggf. auch einer Vorwärmphase nicht nur die im Brennstoffzellensystem anfallende Wärme genutzt werden, sondern es kann zusätzlich auch die erzeugte elektrische Energie zur Erwärmung des Wärmeträgermediums oder/und der in den Fahrzeuginnenraum einzuleitenden Luft herangezogen werden.

Bei dem erfindungsgemäßen Fahrzeugtemperiersystem kann weiter vorgesehen sein, dass die Ventilanordnung dazu ausgebildet ist, wenigstens einen Teil der durch diese herstellbaren Strömungsverbindungen hinsichtlich der Strömungsmenge zu beeinflussen. D.h., dass die Ventilanordnung nicht nur dazu ausgebildet ist, verschiedene der Strömungswege oder alle möglichen Strömungswege oder Strömungsverbindungen freizuschalten oder zu unterbrechen, sondern auch das Ausmaß der Strömung zu beeinflussen, so dass der Übergang zwischen verschiedenen Strömungszuständen oder Strömungskreisläufen in mehr oder weniger kontinuierlicher Art und Weise erlangt werden kann. Es können auf diese Art und Weise beispielsweise spontane Temperaturabfälle des Wärmeträgermediums und somit auch der verschiedenen damit gespeisten Systembereiche vermieden werden, wenn andere Systembereiche mit noch vergleichsweise niedriger Temperatur in den Erwärmungskreislauf zugeschaltet werden.

Gemäß einem weiteren Aspekt der vorliegenden Erfindung wird die eingangs genannte Aufgabe gelöst durch ein Verfahren zum Betreiben eines erfindungsgemäßen Fahrzeugtemperiersystems, bei welchem Verfahren in einer Startphase der Brennkraftmaschine die Wärmequelle betrieben wird, um dem Wärmeträgermedium Wärme zuzuführen, und in einem ersten Abschnitt der Startphase das von der Wärmequelle erwärmte Wärmeträgermedium im Wesentlichen nur dem ersten Wärmeübertragungsbereich oder dem zweiten Wärmeübertragungsbereich zugeleitet wird.

Wie vorangehend bereits erläutert, ist es für eine möglichst schnelle Verringerung des Schadstoffausstoßes in der Startphase besonders vorteilhaft, zunächst denjenigen Bereich verstärkt zu erwärmen, in welchem die Verbrennung abläuft und somit auch Schadstoff erzeugt wird. Alternativ kann die bevorzugte Erwärmung dort erfolgen, wo dies aus reibungstechnischen Gründen besonders vorteilhaft ist, also im Bereich des Motorblocks.

Bei dem erfindungsgemäßen Verfahren kann weiter vorgesehen sein, dass dann, wenn die Temperatur im Bereich des ersten Wärmeübertragungsbereichs eine erste vorbestimmte Temperatur erreicht, in einem zweiten Abschnitt der Startphase ein im Wesentlichen nur den ersten Wärmeübertragungsbereich und eine Förderpumpe umfassender Strömungskreislauf gebildet wird. Es wird damit möglich, dann, wenn eine bestimmte Temperatur im Bereich des Zylinderkopfs vorliegt, welche Temperatur bei beispielsweise 25°C liegen kann, und somit bereits ein gewisses Ausmaß der Schadstoffreduktion erlangt ist, der erste Wärmeübertragungsbereich und damit der Zylinderkopf im Wesentlichen von dem restlichen Temperierkreislauf abgekoppelt wird. Die dann im Bereich des Zylinderkopfs bei der ablaufenden Verbrennung erzeugte Wärme wird somit primär auch im Bereich des Zylinderkopfs gehalten und zur zusätzlichen Erwärmung desselben genutzt. Gleichwohl wird durch Ausbilden dieses sehr kleinen Kreislaufs das darin noch zirkulierende Wärmeträgermedium, das in dieser Phase nicht zur Wärmequelle gelangen kann, miterwärmt. Erreicht im Zuge dieser Erwärmung des Zylinderkopfs die Temperatur im Bereich des ersten Wärmeübertragungsbereichs dann eine zweite vorbestimmte Temperatur, die also im Bereich der normalen Betriebstemperatur bei etwa 90°C bis 100°C liegen kann, kann auch der zweite Wärmeübertragungsbereich in diesen kleinen Strömungskreislauf zugeschaltet werden, der zunächst im Wesentlichen nur den ersten Wärmeübertragungsbereich und die Förderpumpe umfasst hat. Das im Bereich dieses Kreislaufs dann zirkulierende Wärmeträgermedium überträgt Wärme vom Zylinderkopf, also vom ersten Wärmeübertragungsbereich, auf den Motorblock, also den zweiten Wärmeübertragungsbereich, so dass in dieser Phase, ohne zusätzliche Wärme aus der Wärmequelle beanspruchen zu müssen, eine Erhöhung der Temperatur des Motorblocks erlangt werden kann.

Weiter kann bei dem erfindungsgemäßen Verfahren vorgesehen sein, dass in dem zweiten Abschnitt der Startphase das in der Wärmequelle erwärmte Wärmeträgermedium dem zweiten Wärmeübertragungsbereich oder/und der Wärmetauscheranordnung zugeleitet wird oder/und dass in dem dritten Abschnitt der Startphase das in der Wärmequelle erwärmte Wärmeträgermedium im Wesentlichen nur der Wärmetauscheranordnung zugeleitet wird.

Gemäß einem weiteren Aspekt der vorliegenden Erfindung wird die eingangs genannte Aufgabe gelöst durch ein Verfahren zum Betreiben eines erfindungsgemäßen Fahrzeugtemperiersystems, bei welchem Verfahren in einer Startphase der Brennkraftmaschine die Wärmequelle betrieben wird, um dem Wärmeträgermedium Wärme zuzuführen, und in einem ersten Abschnitt der Startphase das in der Wärmequelle erwärmte Wärmeträgermedium im Wesentlichen zur Wärmetauscheranordnung geleitet wird.

Bei diesem erfindungsgemäßen Verfahren wird also dem Konditionieren des Fahrzeugs bzw. des Fahrzeuginnenraums Präferenz gegeben, indem die in der Wärmequelle bereitgestellte Wärme primär bzw. ggf. auch ausschließlich dazu genutzt wird, die in den Fahrzeuginnenraum einzuleitende Luft zu erwärmen.

Ist dann ein bestimmter Konditionierungszustand erreicht, der beispielsweise definiert sein kann durch die Temperatur im Fahrzeuginnenraum, durch die Belegung der Fensterscheiben oder dergleichen, kann dann in einem zweiten Abschnitt der Startphase wenigstens ein Teil des in der Wärmequelle erwärmten Wärmetauschermediums dem ersten Wärmeübertragungsbereich oder/und dem zweiten Wärmeübertragungsbereich zugeleitet werden.

Es sei auch hier darauf hingewiesen, dass der Übergang zwischen den verschiedenen Abschnitten der Startphase selbstverständlich nicht abrupt stattfinden muss. Es kann ein allmähliches Verändern der Strömungsrichtung des Wärmeträgermediums durch entsprechendes Verstellen der Ventilanordnung und ggf. auch verstärktes oder vermindertes Betreiben verschiedener Förderpumpen vorgesehen sein, um die vorangehend bereits angesprochenen spontanen Temperaturänderungen zu vermeiden.

Gemäß einem weiteren Aspekt der vorliegenden Erfindung wird die eingangs genannte Aufgabe gelöst durch ein Verfahren zum Betreiben eines erfindungsgemäßen Fahrzeugtemperiersystems, bei welchem Verfahren vor einer Startphase der Brennkraftmaschine in einer Vorwärmphase die Wärmequelle betrieben wird, um dem Wärmeträgermedium Wärme zuzuführen, und in einem ersten Abschnitt der Vorwärmphase das in der Wärmequelle erwärmte Wärmeträgermedium im Wesentlichen zur Wärmetauscheranordnung geleitet wird.

Mit diesem Verfahren wird also erlangt, dass bereits vor der Nutzungsaufnahme eines Fahrzeugs und somit auch vor der Startphase der Brennkraftmaschine eine gewisse Konditionierung oder Vorkonditionierung des Fahrzeugs bzw. des Innenraums stattfindet, so dass beispielsweise eine gewünschte Temperatur erreicht wird oder/und die Fahrzeugscheiben abgetaut oder von einer Feuchtigkeitsbelegung befreit werden.

Ist auch hier ein bestimmter Konditionierungszustand dann erlangt, kann in einem zweiten Abschnitt der Vorwärmphase wenigstens ein Teil des in der Wärmequelle erwärmten Wärmeträgermediums zum ersten Wärmeübertragungsbereich oder/und zum zweiten Wärmeübertragungsbereich geleitet werden.

Die vorliegende Erfindung wird nachfolgend mit Bezug auf die beiliegenden Zeichnungen detailliert beschrieben. Es zeigt:
- Fig. 1: eine blockbildartige Darstellung eines erfindungsgemäßen Fahrzeugtemperiersystems;
- Fig. 2: eine der Fig. 1 entsprechende Darstellung einer alternativen Ausgestaltungsart eines Fahrzeugtemperiersystems.

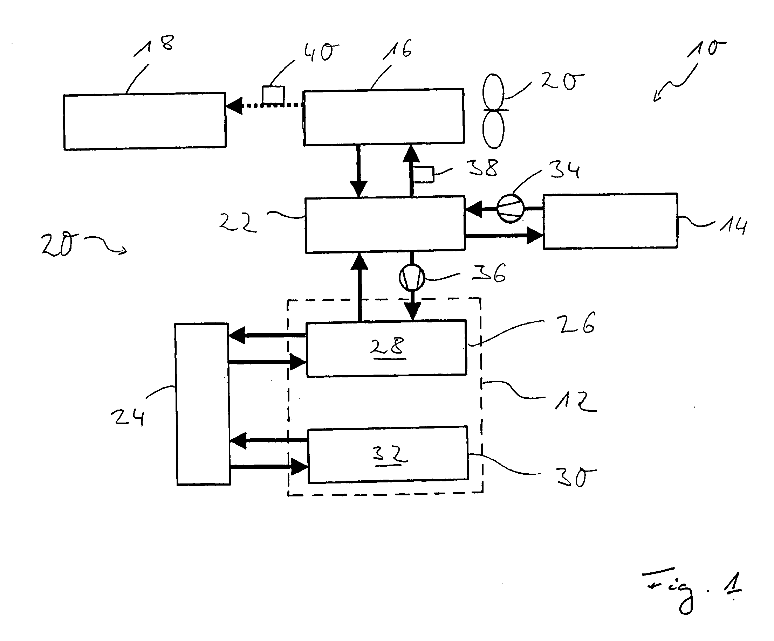

In der Fig. 1 ist ein Fahrzeugtemperiersystem allgemein mit 10 bezeichnet. Dieses Fahrzeugtemperiersystem umfasst als wesentlichen Systembereich eine schematisch angedeutete Brennkraftmaschine 12, die in einer Startphase derselben grundsätzlich als Wärmesenke zu betrachten ist, im normalen Betrieb jedoch Wärme bereitstellen kann, die in anderen Systembereichen genutzt wird. Ferner umfasst das Fahrzeugtemperiersystem 10 eine Wärmequelle 14. Diese Wärmequelle 14 kann beispielsweise ein mit dem gleichen Brennstoff wie die Brennkraftmaschine 12 betriebenes Heizgerät umfassen, das als so genannte Standheizung oder Zuheizer ausgebildet werden kann. Bei der in diesem Heizgerät dann ablaufenden Verbrennung wird Wärme erzeugt, die dann auf ein Wärmeträgermedium, also beispielsweise Wasser, übertragen wird. Diese Wärmequelle 14 kann aber auch ein Brennstoffzellensystem umfassen, das grundsätzlich dazu vorgesehen ist, elektrische Energie bereitzustellen. Ein derartiges Brennstoffzellensystem umfasst eine Brennstoffzelle, in welcher Wasserstoff mit in der Luft enthaltenem Sauerstoff zu Wasser umgesetzt wird, um dabei elektrische Energie zu erzeugen. Bei diesem Umsetzungsprozess wird jedoch auch Wärme freigesetzt, die auf das Wärmeträgermedium übertragen werden kann. Ferner kann ein derartiges Brennstoffzellensystem einen Reformer aufweisen, in welchem aus Kohlenwasserstoff, also beispielsweise ebenfalls fossilem Brennstoff, ein wasserstoffhaltiges Gas in einem Reformierungsprozess bereitgestellt wird. Bei diesem Reformierungsprozess wird ebenfalls Wärme freigesetzt, die ebenfalls zur Erwärmung des Wärmeträgermediums genutzt werden kann.

Das Fahrzeugtemperiersystem 10 umfasst ferner eine Wärmetauscheranordnung 16, in welcher auf die in einen Fahrzeuginnenraum 18 einzuleitende und von einem Gebläse 20 vorangeförderte Luft Wärme übertragen werden kann.

Um die Strömung des Wärmeträgermediums in definierter Art und Weise zwischen den verschiedenen Systembereichen 12, 14 und 16 leiten zu können, ist eine allgemein mit 20 bezeichnete Ventilanordnung vorgesehen. Bei der in Fig. 1 dargestellten Variante umfasst diese Ventilanordnung 20 ein erstes Ventil 22, das grundsätzlich dazu in der Lage ist, die Strömungsverbindung zwischen der Wärmequelle 14, der Brennkraftmaschine 12 und der Wärmetauscheranordnung 16 einzustellen.

Ferner umfasst die Ventilanordnung 20 ein zweites Ventil 24, das im Wesentlichen dazu vorgesehen ist, die Strömungsverbindung zwischen einem im Bereich eines Zylinderkopfs 26 der Brennkraftmaschine vorgesehenen ersten Wärmeübertragunsbereich 28 und einem im Bereich eines Motorblocks 30 der Brennkraftmaschine 12 vorgesehenen zweiten Wärmeübertragungsbereich 32 zu beeinflussen. Bei einer besonders bevorzugten Ausgestaltung des Fahrzeugtemperiersystems 10, sind die beiden Ventile 22, 24 oder zumindest eines davon so ausgestaltet, dass die verschiedenen realisierbaren Strömungsverbindungen nicht nur vollständig freigegeben bzw. vollständig unterbrochen werden können, sondern dass eine Variation der Strömungsmenge vorgesehen sein kann, um beispielsweise ausgehend von einem vollständig unterbrochenen Zustand eines bestimmten Strömungsweges diesen allmählich freizugeben und somit die diesen Strömungsweg durchströmende Menge des Wärmeträgermediums allmählich beispielsweise bis zum maximalen Ausmaß zu erhöhen.

Um die Zirkulation des Wärmeträgermediums erlangen zu können, ist bei der in Fig. 1 dargestellten Variante des Fahrzeugtemperiersystems 10 eine erste Förderpumpe 34 vorgesehen, welche grundsätzlich dafür sorgt, dass das Wärmeträgermedium die Wärmequelle 14 durchströmt bzw. von der Wärmequelle 14 in die verschiedenen anderen Systembereiche gelangen kann. Ferner ist eine zweite Förderpumpe 36 vorgesehen, die im Wesentlichen im Verbindungsbereich zwischen dem ersten Ventil 22 und dem ersten Wärmeübertragungsbereich 28, also dem Zylinderkopf 26 der Brennkraftmaschine 12 wirksam ist und deren Funktion nachfolgend noch beschrieben wird.

Ferner erkennt man bei dem in Fig. 1 dargestellten System im Verbindungsweg zwischen dem ersten Ventil 22 und der Wärmetauscheranordnung 16 ein elektrisch betreibbares Heizelement 38. Auch im Verbindungsweg zwischen der Wärmetauscheranordnung 16 und dem Fahrzeuginnenraum 18, also dem Bereich, in welchem die in den Fahrzeuginnenraum 18 einzuleitende Luft strömt, ist ein derartiges elektrisch betreibbares Heizelement 40 vorgesehen. Vor allem bei Ausgestaltung der Wärmequelle als Brennstoffzellensystem kann die bei der ablaufenden Umsetzung von Wasserstoff mit Sauerstoff erzeugte elektrische Energie genutzt werden, um derartige Heizelemente 38 bzw. 40 zu erregen. Somit kann einerseits dem Wärmeträgermedium und andererseits auch der in den Fahrzeuginnenraum einzuleitenden Luft zusätzlich zu der bereits in der Wärmequelle 14 bereitgestellten Wärme noch weiter Wärme zugeführt werden. Es sei darauf hingewiesen, dass selbstverständlich auch nur eines der beiden Heizelemente 38, 40 vorgesehen sein kann bzw. das Heizelement 38, das zur zusätzlichen Erwärmung des Wärmeträgermediums dient, auch an anderer Stelle positioniert sein kann.

Während, wie vorangehend bereits beschrieben, das Ventil 24 im Wesentlichen dazu dient, die Strömungsverbindung zwischen dem ersten Wärmeübertragungsbereich 28 und dem zweiten Wärmeübertragungsbereich 32 freizugeben bzw. zu unterbrechen, und somit grundsätzlich auch die Funktion hat, den Motorblock 30 in den gesamten Temperierkreislauf einzuschalten bzw. davon abzukoppeln, besteht die wesentliche Aufgabe des ersten Ventils 22 darin, die Strömung des in der Wärmequelle 14 erwärmten Wärmeträgermediums so zu leiten, dass die in diesem transportierte Wärme an der gewünschten Stelle genutzt werden kann. Dazu ist vorzugsweise das erste Ventil 22 so ausgestaltet, dass es in der Lage ist, eine Strömungsverbindung zwischen der Wärmequelle 14 und der Wärmetauscheranordnung 16 herzustellen, und dabei beispielsweise die Strömungsverbindung zur Brennkraftmaschine 12 zu unterbrechen. Ferner soll das Ventil 22 dazu in der Lage sein, bei unterbrochener Strömungsverbindung zur Wärmetauscheranordnung 16 eine Strömungsverbindung zwischen der Wärmequelle 14 und der Brennkraftmaschine 12 herzustellen. Selbstverständlich soll auch die Möglichkeit geschaffen sein, eine Strömungsverbindung zwischen der Brennkraftmaschine 12 und der Wärmetauscheranordnung 16 herzustellen, während in dieser Phase die Wärmequelle 14 dann aus dem Kreislauf abgekoppelt sein kann. In dieser Phase kann dann beispielsweise die Förderpumpe 36 dazu genutzt werden, das Wärmeträgermedium zur Zirkulation anzutreiben. Auch soll das erste Ventil 22 dazu in der Lage sein, die Brennkraftmaschine 12, also den ersten Wärmeübertragungsbereich 28 derart von dem verbleibenden Teil des Kreislaufs abzukoppeln, also von der Wärmequelle 14 und der Wärmetauscheranordnung 16 abzukoppeln, dass bei beispielsweise keine Verbindung zwischen den beiden Wärmeübertragungsbereichen 28 und 32 herstellendem zweiten Ventil 24 ein kleiner Strömungskreislauf gebildet ist, in welchem ein kleiner Anteil des Wärmeträgermediums angetrieben durch die Förderpumpe 36 den ersten Wärmeübertragungsbereich 28 und die diesen mit dem ersten Ventil 22 koppelnden Strömungsleitungen und selbstverständlich auch den entsprechenden Strömungsweg im ersten Ventil 22 strömt. Durch Umschalten des zweiten Ventils 24 kann dann zusätzlich auch noch der Motorblock 30 bzw. der zweite Wärmeübertragungsbereich 32 in diesen ansonsten aber von der Wärmequelle 14 und auch der Wärmetauschernanordnung 16 abgekoppelten Strömungskreislauf eingeschaltet werden.

Es sei noch einmal darauf hingewiesen, dass die Ventilanordnung 20 bzw. die in der Fig. 1 erkennbaren beiden Ventile 22, 24 derselben so ausgestaltet sein können, dass bei den vorangehend angesprochenen verschiedenen Stellmöglichkeiten nicht nur ein vollständiges Abkoppeln oder Zukoppeln der verschiedenen Systembereiche möglich ist, sondern dass beispielsweise dann, wenn über das erste Ventil 22 grundsätzlich eine primäre Kopplung zwischen der Wärmequelle 14 und der Wärmetauscheranordnung 16 realisiert ist, auch noch ein gewisser Anteil des in der Wärmequelle 14 erwärmten Wärmeträgermediums in Richtung zur Brennkraftmaschine 12 strömen kann. Weiter sei darauf hingewiesen, dass nicht notwendigerweise alle vorangehend beschriebenen Stellmöglichkeiten in einem System realisiert sein müssen. Dies wird von den jeweiligen Anforderungen abhängen. Auch sei darauf hingewiesen, dass die Ventilanordnung 20 bzw. die beiden Ventile 22, 24 derselben nicht als eine einzige Baugruppe oder Baueinheit bereitgestellt sein müssen. So kann selbstverständlich jedes dieser Ventile 22, 24 aus mehreren einzelnen Ventileinheiten zusammengesetzt sein, die dann durch eine nicht dargestellte Ansteuervorrichtung jeweils so gestellt werden können, dass sich die gewünschten Strömungswege ergeben.

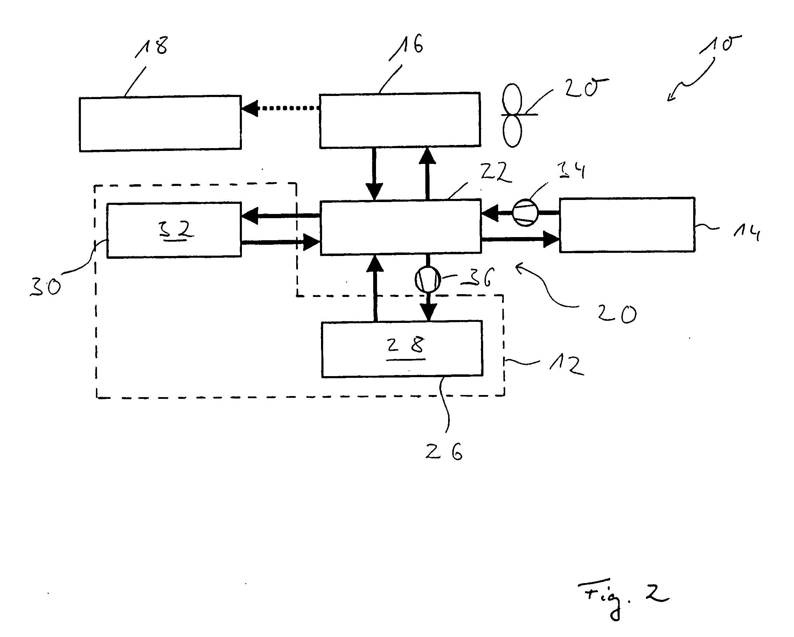

Bevor auf die mit dem erfindungsgemäßen Temperiersystem möglichen Betriebsarten eingegangen wird, wird nachfolgend mit Bezug auf die Fig. 2 eine alternative Variante eines derartigen Temperiersystems 10 beschrieben. Dabei wird im Wesentlichen nur auf die im Vergleich zur Variante der Fig. 1 bestehenden Unterschiede eingegangen.

Bei der in Fig. 2 dargestellten Variante besteht der wesentliche Unterschied darin, dass die Ventilanordnung 20 nur das vorangehend als erstes Ventil bezeichnete Ventil 22 umfasst. Dieses Ventil 22 ist nunmehr auch in der Lage, den zweiten Wärmeübertragunsbereich 32, d.h. den Motorblock 30,in gewünschter Art und Weise mit den anderen Systembereichen, also der Wärmequelle 14, dem ersten Wärmeübertragungsbereich 28 und der Wärmetauscheranordnung 16 zu verbinden. Auch dieses Ventil 22 ist vorzugsweise so ausgestaltet, dass es beliebige Verbindungen zwischen zwei, drei oder allen vier Systembereichen 14, 16, 28 und 32 herstellen kann.

Dies betrifft also auch eine direkte Verbindung des ersten Wärmeübertragungsbereichs 28 mit dem zweiten Wärmeübertragungsbereich 32, um den vorangehend angesprochenen ansonsten von der Wärmequelle 14 und der Wärmetauscheranordnung 16 beispielsweise vollständig abgekoppelten kleinen Strömungskreislauf realisieren zu können. Im Unterschied zu der in Fig. 1 dargestellten Ausgestaltungsvariante kann bei der in Fig. 2 gezeigten Variante jedoch der zweite Wärmeübertragungsbereich 32, also der Motorblock 30, auch direkt mit der Wärmequelle 14 oder/und dem der Wärmetauscheranordnung 16 in Strömungsverbindung gebracht werden, ohne den ersten Wärmeübertragungsbereich 28 in diesen Kreislauf miteinzubeziehen.

Es ist selbstverständlich, dass auch bei der in Fig. 2 gezeigten Variante die vorangehend beschriebenen elektrisch betreibbaren Heizelemente vorgesehen sein können. Grundsätzlich ist es auch denkbar, bei dieser in Fig. 2 gezeigten Variante eine direkte Strömungsverbindung zwischen den beiden Wärmeübertragungsbereichen 28, 32 unter Bereitstellung des auch in Fig. 1 erkennbaren zweiten Ventils 24 zu realisieren.

Nachfolgend werden verschiedene Möglichkeiten beschrieben, mit welchen die in den Figuren 1 und 2 gezeigten Fahrzeugtemperiersysteme 10 betrieben werden können, um vor allem in bzw. auch vor einer Startphase der Brennkraftmaschine 12 in verschiedenen Systembereichen, insbesondere also im Bereich der Brennkraftmaschine 12 und des Fahrzeuginnenraums 18, gewünschte thermische Zustände erlangen zu können.

Es sei zunächst der Fall angenommen, dass ein ein derartiges Fahrzeugtemperiersystem 10 aufweisendes Fahrzeug durch einen Fahrer bei vergleichsweise niedrigen Umgebungstemperaturen in Betrieb genommen wird. Wird also in diesem Zustand die Brennkraftmaschine 12 gestartet, so wird auch die Wärmequelle 14, also beispielsweise ein Heizgerät, in Betrieb gesetzt. Vor allem bei schnell startenden Heizgeräten ist dieses in der Lage innerhalb vergleichsweise kurzer Zeitdauer von bis zu 25 Sekunden die maximale Heizleistung, die beispielsweise im Bereich von 5kW liegen kann, bereitzustellen und das diese Wärmequelle 14 durchströmende Wärmeträgermedium entsprechend zu erwärmen. Soll in dieser Startphase der Brennkraftmaschine 12 der Verringerung der Schadstoffemission Präferenz gegeben werden, was durch die gesetzlich geforderten Emissionswerte in Zukunft verstärkt der Fall sein wird, so kann durch die Ventilanordnung 20 zunächst das Wärmeträgermedium, das in der Wärmequelle 14 Wärme aufgenommen hat, primär bzw. auch ausschließlich zum ersten Wärmeübertragungsbereich 28, also zum Zylinderkopf 26, geleitet werden. Bei der Ausgestaltungsvariante der Fig. 1 wäre also in diesem Zustand lediglich die Strömungsverbindung zwischen der Wärmequelle 14 und dem ersten Wärmeübertragungsbereich 28 freigegeben. Die Wärmetauscheranordnung 16 wäre vollständig abgekoppelt. Der zweite Wärmeübertragungbereich 32 wäre durch entsprechendes Stellen des zweiten Ventils 24 vollständig abgekoppelt. Bei der in Fig. 2 gezeigten Variante würde das einzige Ventil 22 lediglich eine Strömungsverbindung zwischen der Wärmequelle 14 und dem ersten Wärmeübertragungsbereich 26 bereitstellen. In diesem Zustand kann die Zirkulation des Wärmeträgermediums durch ausschließliches Betreiben der Förderpumpe 34 erlangt werden.

Da in diesem ersten Abschnitt der Startphase im Wesentlichen die gesamte im Bereich der Wärmequelle 14 bereitgestellte Wärmeenergie dazu genutzt wird, den Zylinderkopf 28 zu erwärmen, wird dieser vergleichsweise schnell warm werden und beispielsweise eine erste Temperaturschwelle im Bereich von etwa 25°C erreichen. Das Erwärmen auf eine derartige Temperatur führt in vergleichsweise kurzer Zeit bereits zu einer deutlichen Verringerung der Schadstoffemissionen, insbesondere der CO- und HC-Emissionen, da vor allem der Bereich erwärmt wird, in welchem die Schadstoffe erzeugende Verbrennung in der Brennkraftmaschine abläuft.

Da in diesem ersten Abschnitt der Startphase der Motorblock 30 vorzugsweise vollständig vom thermischen Kreislauf abgekoppelt ist, kann bei entsprechender Heizleistung der Wärmequelle 14 und auch unter Berücksichtigung der Umgebungstemperaturen und somit der zum Erwärmen des Zylinderkopfs 26 erforderlichen Energie bereits ein Teil des erwärmten Wärmeträgermediums auch in Richtung zur Wärmetauscheranordnung 16 geleitet werden, um auch in der Startphase bzw. dem ersten Abschnitt der Startphase bereits eine Erwärmung der in den Fahrzeuginnenraum 18 einzuleitenden Luft zu erlangen. Ist jedoch die gesamte in der Wärmequelle 14 bereitgestellte Wärmeenergie erforderlich, um in akzeptierbarer Zeit den Zylinderkopf 26 auf die gewünschte Temperatur beispielsweise im Bereich von 25°C zu bringen, so kann, wie bereits ausgeführt, das in der Wärmequelle 14 erwärmte Wärmeträgermedium ausschließlich in Richtung zum ersten Wärmeübertragungsbereich 28 geleitet werden.

Ist der Zylinderkopf 26 dann bei dieser gewünschten Temperatur, die jedoch noch deutlich unter der Betriebstemperatur liegen kann, kann durch entsprechende Ansteuerung der Ventilanordnung 20 nunmehr der erste Wärmeübertragungsbereich 28 von der Wärmequelle 14 bzw. auch dem Wärmetauscher 16 abgekoppelt werden. Es wird somit der bereits angeführte kleine Strömungskreislauf bereitgestellt, in welchem ein Teil des Wärmeträgermediums zwischen dem ersten Wärmeübertragungsbereich 28 und dem Ventil 22 zirkuliert, angetrieben durch die Förderpumpe 36. Die in der Wärmequelle 14 auf das Wärmeträgermedium übertragene Wärme kann in dieser Phase dann durch Leiten des Wärmeträgermediums im Wesentlichen zur Wärmetauscheranordnung 16 dazu genutzt werden, verstärkt die in den Fahrzeuginnenraum einzuleitende Luft zu erwärmen. Bei der in Fig. 2 dargestellten Variante wäre es grundsätzlich auch möglich, in diesem zweiten Abschnitt der Startphase zumindest auch einen Teil des in der Wärmequelle 14 erwärmten Wärmeträgermediums in Richtung zum zweiten Wärmeübertragungsbereich 32 zu leiten und damit bereits eine Vorwärmung des Motorblocks 30 zu starten.

In diesem zweiten Abschnitt der Startphase ist durch Abkopplung des ersten Wärmeübertragungsbereichs 28 von den sonstigen Wärme bereitstellenden bzw. Wärme aufnehmenden Systembereichen 14, 16, 30 dafür gesorgt, dass die bei der in der Brennkraftmaschine 12 ablaufenden Verbrennung entstehende Wärme im Wesentlichen im Bereich des Zylinderkopfs 26 bzw. des darin zirkulierenden Wärmeträgermediums gehalten wird und somit verstärkt dieser Zylinderkopf 26 weiter erwärmt wird. Diese Phase kann andauern bis der Zylinderkopf 26 dann im Bereich seiner Betriebstemperatur von etwa 90°C bis 100°C ist. Es kann dann in einen dritten Abschnitt der Startphase übergangen werden, in welchem nunmehr auch der Zylinderblock 30 bzw. der zweite Wärmeübertragungsbereich 32 in den zunächst nur im Wesentlichen den ersten Wärmeübertragungsbereich 28 und die zugehörigen Verbindungsleitungen zum Ventil 22 umfassenden Strömungskreislauf zugeschaltet wird. Bei der Ausgestaltungsform gemäß Fig. 1 würde dazu das zweite Ventil 24 so angesteuert werden, dass nunmehr eine Verbindung zwischen den beiden Wärmeübertragungsbereichen 28, 32 vorhanden ist bzw. allmählich entsteht, so dass durch allmählichen Anstieg des Wärmeträgermediumstroms zwischen dem ersten Wärmeübertragungsbereich 28 und dem zweiten Wärmeübertragungsbereich 32 ein spontaner Temperaturabfall vermieden werden kann. Bei der Variante der Fig. 2 kann dieser Strömungskreislauf durch das Koppeln der beiden Wärmeübertragungsbereiche 28, 32 über das Ventil 22 erlangt werden. Auch hier wird der Wärmeträgermediumstrom dann durch Betreiben der Förderpumpe 36 angetrieben. Das dann noch durch die Wärmequelle 14 unter der Förderwirkung der Förderpumpe 34 zirkulierende Wärmeträgermedium kann beispielsweise vollständig in Richtung zur Wärmetauscheranordnung 16 geleitet werden, um somit verstärkt die in den Fahrzeuginnenraum 18 einzuleitende Luft zu erwärmen.

Man erkennt aus der vorangehenden Beschreibung, dass beim Übergang vom ersten Abschnitt der Startphase bis zum dritten Abschnitt der Startphase so gearbeitet werden kann, dass unter der bestmöglichen Erwärmung der hinsichtlich der Erzeugung von Schadstoffemissionen relevanten Systembereiche, also insbesondere des Zylinderkopfs 26 und dann auch des Motorblocks 30, gleichwohl auch in dem noch möglichen Ausmaß bereits eine Erwärmung des Fahrzeuginnenraums 18 stattfinden kann. All dies kann unterstützt werden dadurch, dass zusätzlich in verschiedenen Phasen auch noch die Heizelemente 38, 40 erregt werden, vor allem dann, wenn die Wärmequelle 14 eine Brennstoffzelle umfasst.

Ist die Brennkraftmaschine 12 dann in ihrer Gesamtheit im Wesentlichen auf Betriebstemperatur, so wird sie grundsätzlich dazu in der Lage sein, die im Fahrzeug dann noch benötigte Wärme, also auch die zur Erwärmung des Innenraums 18 erforderliche Wärme, ohne Unterstützung durch die Wärmequelle 14 bereitzustellen, d.h., es könnte dann nach dem dritten Abschnitt der Startphase und sozusagen ab dem Beginn einer normalen Betriebsphase die Wärmequelle 14 vom Strömungskreislauf abgekoppelt werden und über das Ventil 22 eine Verbindung zwischen der Brennkraftmaschine 12 und der Wärmetauscheranordnung 16 hergestellt werden, um aus dem Bereich der Brennkraftmaschine 12 Wärme abzuführen und diese im Bereich des Wärmetauschers 16 auf die in den Fahrzeuginnenraum 18 einzuleitende Luft zu übertragen oder im Bereich eines weiteren in den Figuren nicht dargestellten Wärmetauschers zur Umgebung hin abgeben zu können. In diesem Zustand kann dann auf Grund der Abkopplung der Wärmequelle 14 und somit auch der Förderpumpe 34 die Zirkulation durch Betreiben der Förderpumpe 36 aufrecht erhalten werden.

Bei der vorangehend beschriebenen Prozedur ist also der Erwärmung der Brennkraftmaschine 12, insbesondere des Zylinderkopfs 26 derselben, gegenüber der Erwärmung des Fahrzeuginnenraums 18 Präferenz gegeben, um somit möglichst schnell die Schadstoffemission in der Startphase abzusenken. Soll jedoch der schnelleren Erwärmung des Innenraums Präferenz gegeben werden, so kann so vorgegangen werden, dass zunächst in dem ersten Abschnitt der Startphase durch ausschließliches oder primäres Leiten des Wärmeträgermediums zur Wärmetauscheranordnung 16 zunächst der Innenraum 18 im gewünschten Ausmaß konditioniert werden. Wird eine bestimmte vorgegebene Temperatur oder ein sonstiger Konditionierungszustand, wie beispielsweise die Enteisung der Fensterscheiben oder dergleichen, erreicht, so kann dann das Wärmeträgermedium in Richtung zur Brennkraftmaschine 12, beispielsweise zunächst wieder zum Zylinderkopf 26, geleitet werden. Auch dieser Übergang vom Leiten des Wärmeträgermediums zur Wärmetauscheranordnung 16 zum Leiten des Wärmeträgermediums zur Brennkraftmaschine 12 kann kontinuierlich stattfinden, wobei auch vorgesehen sein kann, dass zumindest immer ein geringer Anteil des Wärmeträgermediums noch in Richtung zur Wärmetauscheranordnung 16 gelangt, auch wenn dann in einem zweiten Abschnitt der Startphase verstärkt die Brennkraftmaschine 12 erwärmt werden soll. In diesem zweiten Abschnitt kann dann wieder so vorgegangen werden, dass zunächst beispielsweise ausschließlich oder primär der Zylinderkopf 26 erwärmt wird und dann, wenn dieser ausreichend warm ist, zusätzlich auch der Motorblock 30 durch Zuleiten des Wärmeträgermediums zum zweiten Wärmeübertragungsbereich 32 miterwärmt wird.

Ist die Wärmequelle 14 derart, dass sie bereits auch in Betreib gesetzt werden kann, bevor die Brennkraftmaschine 12 gestartet wird, so kann eine Vorkonditionierung des Fahrzeuginnenraums 18 bzw. auch der Brennkraftmaschine 12 auch bereits vor der geplanten Nutzungsaufnahme der Brennkraftmaschine 12 erfolgen. Ist beispielsweise durch entsprechende Programmierung eines Steuergeräts für die Wärmequelle 14 bekannt, wann die Nutzungsaufnahme erfolgen soll, so kann in einem davor liegenden Vorwärmzeitraum die Wärmequelle 14 betrieben werden, um beispielsweise zunächst durch ausschließliches oder primäres Leiten des erwärmten Wärmeträgerstroms zur Wärmetauscheranordnung 16 den Fahrzeuginnenraum 18 in den gewünschten Zustand zu bringen. Ist dieser Zustand erreicht, so kann dann in einem zweiten Abschnitt der Vorwärmphase ausschließlich oder verstärkt bzw. zunehmend warmes Wärmeträgermedium in Richtung zur Brennkraftmaschine 12 geleitet werden. Auch hier kann vorgesehen sein, dass zunächst verstärkt der Zylinderkopf 26 mit Wärmeträgermedium versorgt wird und dann, wenn dieser eine bestimmte Temperatur erreicht hat, zusätzlich oder verstärkt auch der Motorblock 30 durch Zuführen von Wärmeträgermedium zum zweiten Wärmeübertragungsbereich 32 erwärmt wird.

Die Zeitdauer der Vorwärmphase kann auch unter Berücksichtigung der Umgebungstemperatur bzw. der Temperatur in verschiedenen Systembereichen des erfindungsgemäßen Temperiersystems 10 so gewählt werden, dass sie ausreichend lang ist, um sowohl im Bereich des Innenraums 18, als auch im Bereich der Brennkraftmaschine 12 die gewünschte Vorkonditionierung zu erlangen. Wird dann die Brennkraftmaschine 12 in Betrieb gesetzt und somit die Startphase begonnen, kann beispielsweise eine der vorangehenden Prozeduren folgen, mit welchen in der Startphase dann dafür gesorgt wird, dass möglichst schnell eine weitere Absenkung der Schadstoffemission durch ausreichend starkes Erwärmen der Brennkraftmaschine 12 erlangt wird.

In einer weiteren Betriebsart kann das erfindungsgemäße System so eingesetzt werden, dass beispielsweise nicht der Schadstoffemission im Bereich der Brennkraftmaschine 12 in der Startphase verstärkt Aufmerksamkeit geschenkt wird, sondern den tribologischen Eigenschaften derselben. Insbesondere beim Start bei vergleichsweise niedrigen Umgebungstemperaturen wird die im Bereich der bezüglich einander sich bewegenden Bauteile auftretende Reibung auch durch eine vergleichsweise hohe Viskosität des Schmiermittels relativ hoch sein. Auch dies kann ein Faktor sein, der zunächst zu einer erhöhten Belastung und somit Schadstoffemission der Brennkraftmaschine 12 führt. Um hier möglichst rasch in einen Zustand geringerer Reibung zu gelangen, kann es vorteilhaft sein, diejenigen Systembereiche verstärkt zu erwärmen, die diesbezüglich relevant sind. Dies ist im Allgemeinen der Motorblock 30, in welchem beispielsweise die Kolben sich unter Erzeugung einer Reibwirkung hin- und herbewegen, und ist beispielsweise auch der Schmiermittelsumpf. Durch entsprechende Ausgestaltung des zweiten Wärmeübertragungsbereichs 32 und verstärkte bzw. auch ausschließliche Versorgung desselben mit erwärmtem Wärmeträgermedium in der Startphase kann also möglichst rasch ein Zustand geringerer Reibung erlangt werden, was auf Grund der geringeren Belastung der Brennkraftmaschine ebenfalls zu einer verringerten Schadstoffemission führen kann.

Weiter sei darauf hingewiesen, dass bei dem erfindungsgemäßen Temperiersystem 10 vorzugsweise vorgesehen sein kann, dass die verschiedenen thermisch relevanten Baugruppen, insbesondere die Brennkraftmaschine 12, thermisch so gut als möglich abgekapselt sind, um die dort entstehende oder vorhandene Wärme möglichst wenig zur Umgebung hin abzugeben und somit eine Auskühlung dieser Systembereiche in Standphasen zu vermeiden. Diese Abkapselung kann durch geeignete Isolationsmaterialien bereitgestellt werden, die diese verschiedenen Systembereiche umgeben, angeordnet werden können.

Es sei abschließend darauf hingewiesen, dass selbstverständlich bei dem vorangehend beschriebenen Temperiersystem Variationen vorgenommen werden können. So ist es beispielsweise möglich, verschiedene Strömungen des Wärmeträgermediums nicht oder nicht nur durch Verstellen verschiedener Ventile zu erlangen, sondern beispielsweise auch durch das gezielte Zu- bzw. Abschalten von Förderpumpen. Auch ist es selbstverständlich, dass auf Grund der Variabilität in der Zu- bzw. Abschaltung verschiedener Wärme bereitstellender bzw. Wärme aufnehmender Systembereiche beliebige Kombinationen erlangt werden können. So könnte beispielsweise vor allem bei der in Fig. 2 gezeigten Variante ausschließlich auch der Motorblock 30 mit der Wärmetauscheranordnung 16 gekoppelt werden, um die im Bereich des Motorblocks 30 anfallende Wärme zur Erwärmung des Innenraums zu nutzen. Soll unter Berücksichtigung der tribologischen Eigenschaften die im Bereich des Motorblocks 30 vorhandene Wärme dort auch möglichst gehalten werden bzw. zur Erwärmung des Schmiermittels genutzt werden, so kann zur Erwärmung der in den Fahrzeuginnenraum 18 einzuleitenden Luft beispielsweise nur der Zylinderkopf 26, also der erste Wärmeübertragungsbereich 28, mit der Wärmetauscheranordnung 16 gekoppelt werden, um einen entsprechenden Temperaturübertrag zu erlangen.

## Patentansprüche

1. Fahrzeugtemperiersystem, umfassend:
- eine Brennkraftmaschine (12) mit einem Motorblock (30) und einem Zylinderkopf (26),
- eine Wärmequelle (14) zur Erwärmung eines Wärmeträgermediums,
- eine Wärmetauscheranordnung (16) zur Übertragung von in dem Wärmeträgermedium transportierter Wärme auf in einen Fahrzeuginnenraum (18) einzuleitende Luft,
- eine Ventilanordnung (20), durch welche das von der Wärmequelle erwärmte Wärmeträgermedium wahlweise wenigstens zum Teil einem im Bereich des Zylinderkopfs (26) vorgesehenen ersten Wärmeübertragungsbereich (28) der Brennkraftmaschine (12) zuleitbar ist, ohne in einen zweiten Wärmeübertragungsbereich (32)der Brennkraftmaschine (12) geleitet zu werden, der im Bereich des Motorblocks (30) vorgesehen ist,
**dadurch gekennzeichnet, dass** die Ventilanordnung (20) ferner dazu ausgebildet ist, einen im Wesentlichen nur den ersten Wärmeübertragungsbereich (28) und eine Förderpumpe (36) umfassenden und von der Wärmequelle (14) und der Wärmetauscheranordung (16) abgekoppelten Strömungskreislauf bereitzustellen.

2. Fahrzeugtemperiersystem nach Anspruch 1,
**dadurch gekennzeichnet, dass** die Ventilanordnung (20) ein erstes Ventil (22) umfasst, welches dazu ausgebildet ist, wahlweise eine Strömungsverbindung zwischen
- der Wärmequelle (14) und der Wärmetauscheranordnung (16) oder/und
- der Wärmequelle (14) und dem ersten Wärmeübertragungsbereich (28) oder/und
- der Wärmetauscheranordnung (16) und dem ersten Wärmeübertragungsbereich (28)
herzustellen.

3. Fahrzeugtemperiersystem nach Anspruch 2,
**dadurch gekennzeichnet, dass** die Ventilanordnung (20) ein zweites Ventil (24) umfasst, das dazu ausgebildet ist, wahlweise eine Strömungsverbindung zwischen dem ersten Wärmeübertragungsbereich (28) und dem zweiten Wärmeübertragungsbereich (32) herzustellen.

4. Fahrzeugtemperiersystem nach Anspruch 2 oder 3,
**dadurch gekennzeichnet, dass** das erste Ventil (22) dazu ausgebildet ist, wahlweise eine Strömungsverbindung zwischen dem zweiten Wärmeübertragungsbereich (32) und der Wärmequelle (14) herzustellen.

5. Temperiersystem nach Anspruch 4,
**dadurch gekennzeichnet, dass** das erste Ventil (22) dazu ausgebildet ist, wahlweise eine Strömungsverbindung zwischen
- dem zweiten Wärmeübertragungsbereich (32) und dem ersten Wärmeübertragungsbereich (28) oder/und
- dem zweiten Wärmeübertragungsbereich (32) und der Wärmetauscheranordnung (16)
herzustellen.

6. Temperiersystem nach einem der Ansprüche 1 bis 5,
**dadurch gekennzeichnet, dass** die Wärmequelle (14) ein vorzugsweise mit fossilem Brennstoff betreibbares Heizgerät oder/und eine Brennstoffzellensystem umfasst.

7. Temperiersystem nach einem der Ansprüche 1 bis 6,
**dadurch gekennzeichnet, dass** eine elektrisch betreibbare Heizeinrichtung (38, 40) vorgesehen ist, durch welche dem Wärmeträgermedium oder/und der in den Fahrzeuginnenraum (18) einzuleitenden Luft Wärme zuführbar ist

8. Temperiersystem nach einem der Ansprüche 1 bis 7,
**dadurch gekennzeichnet, dass** die Ventilanordnung (20) dazu ausgebildet ist, wenigstens einen Teil der durch diese herstellbaren Strömungsverbindungen hinsichtlich der Strömungsmenge zu beeinflussen.

9. Verfahren zum Betreiben eines Fahrzeugtemperiersystems (10) nach einem der vorangehenden Ansprüche, bei welchem Verfahren in einer Startphase der Brennkraftmaschine (12) die Wärmequelle (14) betrieben wird, um dem Wärmeträgermedium Wärme zuzuführen, und in einem ersten Abschnitt der Startphase das von der Wärmequelle (14) erwärmte Wärmeträgermedium im Wesentlichen nur dem ersten Wärmeübertragungsbereich (28) oder dem zweiten Wärmeübertragungsbereich (32) zugeleitet wird.

10. Verfahren nach 9,
**dadurch gekennzeichnet, dass** dann, wenn die Temperatur im Bereich des ersten Wärmeübertragungsbereichs (28) eine erste vorbestimmte Temperatur erreicht, in einem zweiten Abschnitt der Startphase ein im Wesentlichen nur den ersten Wärmeübertragungsbereich (28) und eine Förderpumpe (36) umfassender Strömungskreislauf gebildet wird.

11. Verfahren nach 10,
**dadurch gekennzeichnet, dass** dann, wenn die Temperatur im Bereich des ersten Wärmeübertragungsbereichs (28) eine zweite vorbestimmte Temperatur erreicht, in einem dritten Abschnitt der Startphase der zweite Wärmeübertragungsbereich (32) zu dem im Wesentlichen nur den ersten Wärmeübertragungsbereich (28) und die Förderpumpe (36) umfassenden Strömungskreislauf zugeschaltet ist.

12. Verfahren nach Anspruch 10 oder 11,
**dadurch gekennzeichnet, dass** in dem zweiten Abschnitt der Startphase das in der Wärmequelle (14) erwärmte Wärmeträgermedium dem zweiten Wärmeübertragungsbereich (32) oder/und der Wärmetauscheranordnung (16) zugeleitet wird.

13. Verfahren nach Anspruch 11 oder Anspruch 12, sofern auf Anspruch 11 rückbezogen,
**dadurch gekennzeichnet, dass** in dem dritten Abschnitt der Startphase das in der Wärmequelle (14) erwärmte Wärmeträgermedium im Wesentlichen nur der Wärmetauscheranordnung (16) zugeleitet wird.

14. Verfahren zum Betreiben eines Fahrzeugtemperiersystems nach einem der Ansprüche 1 bis 8,
bei welchem Verfahren in einer Startphase der Brennkraftmaschine (12) die Wärmequelle (14) betrieben wird, um dem Wärmeträgermedium Wärme zuzuführen, und in einem ersten Abschnitt der Startphase das in der Wärmequelle (14) erwärmte Wärmeträgermedium im Wesentlichen zur Wärmetauscheranordnung (16) geleitet wird.

15. Verfahren nach Anspruch 14,
**dadurch gekennzeichnet, dass** nach Erreichen eines vorbestimmten Konditionierungszustandes in einem zweiten Abschnitt der Startphase wenigstens ein Teil des in der Wärmequelle (14) erwärmten Wärmeträgermediums dem ersten Wärmeübertragungsbereich (28) oder/und dem zweiten Wärmeübertragungsbereich (32) zugeleitet wird.

16. Verfahren zum Betreiben eines Fahrzeugtemperiersystems nach einem der Ansprüche 1 bis 8,
bei welchem Verfahren vor einer Startphase der Brennkraftmaschine (12) in einer Vorwärmphase die Wärmequelle (14) betrieben wird, um dem Wärmeträgermedium Wärme zuzuführen, und in einem ersten Abschnitt der Vorwärmphase das in der Wärmequelle (14) erwärmte Wärmeträgermedium im Wesentlichen zur Wärmetauscheranordnug (16) geleitet wird.

17. Verfahren nach Anspruch 16,
**dadurch gekennzeichnet, dass** nach Erreichen eines vorbestimmten Konditionierungszustandes in einem zweiten Abschnitt der Vorwärmphase wenigstens ein Teil des in der Wärmequelle (14) erwärmten Wärmetauschermediums dem ersten Wärmeübertragungsbereich (28) oder/und dem zweiten Wärmeübertragungsbereich (32) zugeleitet wird.

## Claims

1. A vehicle temperature control system, comprising:
- an internal combustion engine (12) with an engine block (30) and with a cylinder head (26),
- a heat source (14) for heating a heat transfer medium,
- a heat exchanger arrangement (16) for the transfer of heat transported in the heat transfer medium to air to be introduced into a vehicle interior (18),
- a valve arrangement (20), by means of which the heat transfer medium heated by the heat source can be fed selectively, at least in part, to a first heat transfer region (28), provided in the region of a cylinder head (26), of the internal combustion engine (12), without being conducted into a second heat transfer region (32), provided in the region of the engine block (30), of the internal combustion engine (12), **characterized in that** the valve arrangement (20) is further designed for providing a flow circuit comprising essentially only the first heat transfer region (28) and a feed pump (36) and being decoupled from the heat source (14) and the heat exchanger arrangement (16).

2. The vehicle temperature control system as claimed in claim 1, **characterized in that** the valve arrangement (20) comprises a first valve (22) which is designed for selectively making a flow connection between
- the heat source (14) and the heat exchanger arrangement (16) or/and
- the heat source (14) and the first heat transfer region (28) or/and
- the heat exchanger arrangement (16) and the first heat transfer region (28).

3. The vehicle temperature control system as claimed in claim 2, **characterized in that** the valve arrangement (20) comprises a second valve (24) which is designed for selectively making a flow connection between the first heat transfer region (28) and the second heat transfer region (32).

4. The vehicle temperature control system as claimed in claim 2 or 3, **characterized in that** the first valve (22) is designed for selectively making a flow connection between the second heat transfer region (32) and the heat source (14).

5. The temperature control system as claimed in claim 4, **characterized in that** the first valve (22) is designed for selectively making a flow connection between
- the second heat transfer region (32) and the first heat transfer region (28) or/and
- the second heat transfer region (32) and the heat exchanger arrangement (16).

6. The temperature control system as claimed in one of claims 1 to 5, **characterized in that** the heat source (14) comprises a heating appliance preferably operable with fossil fuel or/and a fuel cell system.

7. The temperature control system as claimed in one of claims 1 to 6, **characterized in that** an electrically operable heating device (38, 40) is provided, by means of which heat can be supplied to the heat transfer medium or/and to the air to be introduced into the vehicle interior (18).

8. The temperature control system as claimed in one of claims 1 to 7, **characterized in that** the valve arrangement (20) is designed to influence, in terms of the flow quantity, at least some of the flow connections capable of being made by this valve arrangement.

9. A method for operating a vehicle temperature control system (10) as claimed in one of the preceding claims, in which method, in a starting phase of the internal combustion engine (12), the heat source (14) is operated in order to supply heat to the heat transfer medium and, in a first portion of the starting phase, the heat transfer medium heated by the heat source (14) is fed essentially only to the first heat transfer region (28) or the second heat transfer region (32).

10. The method as claimed in claim 9, **characterized in that**, when the temperature in the region of the first heat transfer region (28) reaches a first predetermined temperature, in a second portion of the starting phase a flow circuit comprising essentially only the first heat transfer region (28) and a feed pump (36) is formed.

11. The method as claimed in claim 10, **characterized in that**, when the temperature in the region of the first heat transfer region (28) reaches a second predetermined temperature, in a third portion of the starting phase the second heat transfer region (32) is connected to the flow circuit comprising essentially only the first heat transfer region (28) and the feed pump (36).

12. The method as claimed in claim 10 or 11, **characterized in that**, in the second portion of the starting phase, the heat transfer medium heated in the heat source (14) is fed to the second heat transfer region (32) or/and the heat exchanger arrangement (16).

13. The method as claimed in claim 11 or claim 12, in so far it refers back to claim 11, **characterized in that**, in the third portion of the starting phase, the heat transfer medium heated in the heat source (14) is fed essentially only to the heat exchanger arrangement (16).

14. A method for operating a vehicle temperature control system as claimed in one of claims 1 to 8, in which method, in a starting phase of the internal combustion engine (12), the heat source (14) is operated in order to supply heat to the heat transfer medium and, in a first portion of the starting phase, the heat transfer medium heated in the heat source (14) is conducted essentially to the heat exchanger arrangement (16).

15. The method as claimed in claim 14, **characterized in that**, after a predetermined conditioning state is reached, in a second portion of the starting phase, at least part of the heat transfer medium heated in the heat source (14) is fed to the first heat transfer region (28) or/and the second heat transfer region (32).

16. A method for operating a vehicle temperature control system as claimed in one of claims 1 to 8, in which method, before a starting phase of the internal combustion engine (12), the heat source (14) is operated in a preheating phase in order to supply heat to the heat transfer medium and, in a first portion of the preheating phase, the heat transfer medium heated in the heat source (14) is conducted essentially to the heat exchanger arrangement (16).

17. The method as claimed in claim 16, **characterized in that**, after a predetermined conditioning state is reached, in a second portion of the preheating phase, at least part of the heat transfer medium heated in the heat source (14) is fed to the first heat transfer region (28) or/and the second heat transfer region (32).

## Revendications

1. Système pour tempérer un véhicule, comprenant :
- un moteur à combustion interne (12) avec un bloc-cylindres (30) et une culasse (26),
- une source de chaleur (14) pour réchauffer un milieu caloporteur,
- un dispositif échangeur de chaleur (16) pour transmettre la chaleur transportée par le milieu caloporteur à l'air entrant dans un habitacle de véhicule (18),
- un système de soupapes (20), au moyen duquel le milieu caloporteur chauffé par la source de chaleur peut être amené de manière optionnelle au moins en partie dans une première zone de transmission de chaleur (28) du moteur à combustion interne (12) prévue dans la zone de la culasse (26), sans être amené dans une deuxième zone de transmission de chaleur (32) du moteur à combustion interne (12), qui est prévue dans la zone du bloc-cylindres (30),
**caractérisé en ce que** le système de soupapes (20) est en outre conçu pour fournir un circuit d'écoulement, comprenant essentiellement uniquement une première zone de transmission de chaleur (28) et une pompe de refoulement (36), et désolidarisé de la source de chaleur (14) et du dispositif échangeur de chaleur (16).

2. Système pour tempérer un véhicule selon la revendication 1,
**caractérisé en ce que** le système de soupapes (20) comprend une première soupape (22) qui est conçue de manière à réaliser de façon optionnelle une liaison d'écoulement entre
- la source de chaleur (14) et le dispositif échangeur de chaleur (16) et/ou
- la source de chaleur (14) et la première zone de transmission de chaleur (28) et/ou
- le dispositif échangeur de chaleur (16) et la première zone de transmission de chaleur (28).

3. Système pour tempérer un véhicule selon la revendication 2,
**caractérisé en ce que** le système de soupapes (20) comprend une deuxième soupape (24) qui est conçue de manière à réaliser de façon sélective une liaison d'écoulement entre la première zone de transmission de chaleur (28) et la deuxième zone de transmission de chaleur (32).

4. Système pour tempérer un véhicule selon la revendication 2 ou 3,
**caractérisé en ce que** la première soupape (22) est conçue de manière à créer de façon sélective une liaison d'écoulement entre la deuxième zone de transmission de chaleur (32) et la source de chaleur (14).

5. Système pour tempérer un véhicule selon la revendication 4,
**caractérisé en ce que** la première soupape (22) est conçue de manière à créer de façon sélective une liaison d'écoulement entre
- la deuxième zone de transmission de chaleur (32) et la première zone de transmission de chaleur (28) et/ou
- la deuxième zone de transmission de chaleur (32) et le dispositif échangeur de chaleur (16).

6. Système pour tempérer un véhicule selon l'une quelconque des revendications 1 à 5,
**caractérisé en ce que** la source de chaleur (14) comprend un appareil de chauffage fonctionnant de préférence au moyen d'un combustible fossile et/ou un système de pile à combustible.

7. Système pour tempérer un véhicule selon l'une quelconque des revendications 1 à 6,
**caractérisé en ce qu'**un dispositif de chauffage (38, 40) fonctionnant à l'électricité est prévu, au moyen duquel de la chaleur peut être transférée au milieu caloporteur et/ou à l'air entrant dans l'habitacle du véhicule (18).

8. Système pour tempérer un véhicule selon l'une quelconque des revendications 1 à 7,
**caractérisé en ce que** le système de soupapes (20) est conçu de manière influer sur au moins une partie des liaisons d'écoulement réalisées par celui-ci concernant la quantité d'écoulement.

9. Procédé de mise en oeuvre d'un système pour tempérer un véhicule (10) selon l'une quelconque des revendications précédentes, dans lequel la source de chaleur (14) est utilisée dans une phase de démarrage du moteur à combustion interne (12) pour transférer de la chaleur au milieu caloporteur, et dans une première partie de la phase de démarrage le milieu caloporteur chauffé par la source de chaleur (14) est amené essentiellement uniquement à la première zone de transmission de chaleur (28) ou à la deuxième zone de transmission de chaleur (32).

10. Procédé selon la revendication 9, **caractérisé en ce que** lorsque la température dans la zone de la première zone de transmission de chaleur (28) atteint alors une première température prédéterminée, dans une deuxième partie de la phase de démarrage, un circuit d'écoulement est formé, comprenant essentiellement uniquement la première zone de transmission de chaleur (28) et une pompe de refoulement (36).

11. Procédé selon la revendication 10, **caractérisé en ce que** lorsque la température dans la zone de la première zone de transmission de chaleur (28) atteint alors une deuxième température prédéterminée, dans une troisième partie de la phase de démarrage, la deuxième zone de transmission de chaleur (32) est connectée au circuit d'écoulement comprenant essentiellement uniquement la première zone de transmission de chaleur (28) et la pompe de refoulement (36).

12. Procédé selon la revendication 10 ou 11, **caractérisé en ce que** dans la deuxième partie de la phase de démarrage le milieu caloporteur chauffé dans la source de chaleur (14) est amené à la deuxième zone de transmission de chaleur (32) ou/et au dispositif échangeur de chaleur (16).

13. Procédé selon la revendication 11 ou la revendication 12, lorsqu'elle dépend de la revendication 11, **caractérisé en ce que** dans la troisième partie de la phase de démarrage le milieu caloporteur chauffé dans la source de chaleur (14) est amené essentiellement uniquement au dispositif échangeur de chaleur (16).

14. Procédé de mise en oeuvre d'un système pour tempérer un véhicule selon l'une quelconque des revendications 1 à 8,
dans lequel dans une phase de démarrage du moteur à combustion interne (12), la source de chaleur (14) est utilisée pour transférer de la chaleur au milieu caloporteur, et dans une première partie de la phase de démarrage le milieu caloporteur chauffé dans la source de chaleur (14) est amené essentiellement au dispositif échangeur de chaleur (16).

15. Procédé selon la revendication 14,
**caractérisé en ce qu'**une fois qu'un état de conditionnement prédéterminé a été atteint dans une deuxième partie de la phase de démarrage, une partie du milieu caloporteur chauffé dans la source de chaleur (14) est amenée à la première zone de transmission de chaleur (28) et/ou la deuxième zone de transmission de chaleur (32).

16. Procédé de mise en oeuvre d'un système pour tempérer un véhicule selon l'une quelconque des revendications 1 à 8,
dans lequel, avant une phase de démarrage du moteur à combustion interne (12), dans une phase de préchauffage, la source de chaleur (14) est utilisée pour transférer de la chaleur au milieu caloporteur, et dans une première partie de la phase de préchauffage le milieu caloporteur chauffé dans la source de chaleur (14) est amené essentiellement au dispositif échangeur de chaleur (16).

17. Procédé selon la revendication 16,
**caractérisé en ce qu'**une fois qu'un état de conditionnement prédéterminé a été atteint dans une deuxième partie de la phase de préchauffage, au moins une partie du milieu caloporteur chauffé dans la source de chaleur (14) est amenée à la première zone de transmission de chaleur (28) et/ou à la deuxième zone de transmission de chaleur (32).
